# EUROPEAN PATENT SPECIFICATION

(11) **EP 3 347 395 B1**
(45) Date of publication and mention of the grant of the patent: **22.04.2020**
(21) Application number: 16760870.2
(22) Date of filing: 25.08.2016
(51) Int. Cl.: C08G 18/75, C08G 18/76, C08G 18/10, C08G 18/22, C08G 18/28, C08L 75/08

(54) **MOISTURE CURABLE SYSTEMS BASED ON POLYSILYLATED POLYETHERS AND TITANIUM (IV) CATALSTS AND/OR ZINC/CYCLIC AMIDINE CATALYST MIXTURES**
FEUCHTIGKEITSHÄRTENDE SYSTEME AUF DER BASIS VON POLYSILYLIERTEN POLYETHERN UND TITAN(IV)-KATALYSATOREN UND/ODER ZINK/CYCLISCHE AMIDINKATALYSATORGEMISCHEN
SYSTÈMES DURCISSABLES À L'HUMIDITÉ À BASE DE POLYÉTHERS POLYSILYLÉS ET DE CATALYSEURS DE TITANE (IV) ET/OU DE MÉLANGES DE CATALYSEURS DE ZINC/AMIDINE CYCLIQUE

(30) Priority: 10.09.2015 US 201562216533 P; 13.11.2015 US 201562255169 P
(43) Date of publication of application: 18.07.2018
(73) Proprietor: Dow Global Technologies LLC, Midland, MI 48674 (US)
(72) Inventor: GOYAL, Sachit, Freeport, TX 77541 (US); XU, Qiuyun, Midland, Michigan 48674 (US); HEATH, William, H., Freeport, TX 77541 (US); STEPHENSON, Amber, M., Freeport, TX 77541 (US)
(74) Representative: Beck Greener LLP
(86) International application number: PCT/US2016/048700
(87) International publication number: WO 2017/044319

(56) References cited:
- US-A1- 2014 100 348
- US-A1- 2014 309 372
- US-B2- 8 877 885

## Description

This invention relates to moisture curable systems that contain polysilylated polyethers.

Polymers that contain hydrolysable silane groups undergo hydrolysis with water to form silanols. These silanols can then condense with one another to form siloxane (-Si-O-Si-) linkages which further cross-link the resin and build strength into the cured product.

The moisture curing reaction needs to be catalyzed to cure the polymer in a reasonable amount of time, especially when the curing is done at about room temperature.

Tin catalysts are commonly used for this purpose. The tin catalysts provide good room temperature curing rates when present in only small quantities. In some jurisdictions, however, the tin catalysts are coming under regulatory scrutiny, and for that reason there is a desire to find alternative catalysts.

The silyl-terminated polyethers often contain urethane groups. In those cases there are other problems associated with tin catalysts. The silyl-terminated polyethers can degrade in the presence of the tin catalysts, particularly at elevated temperatures, which leads to short shelf-life and poor properties in the cured resin. The cured resin can also decompose in the presence of the tin catalyst, particularly when exposed to elevated temperatures.

Unfortunately, it has proven to be difficult to find good alternatives to the tin catalysts. The problem becomes more difficult when the silane groups are alkyldialkoxysilane groups instead of trialkoxysilane groups. Very few catalysts are known to effectively catalyze the moisture cure of alkyldialkoxysilane groups. Nonetheless, there is in many systems a strong desire to use alkyldialkoxysilane terminal groups, because these groups react only difunctionally and therefore introduce less cross-linking into the cured polymer (resulting in better pot life and lower modulus) than do trialkoxysilane terminal groups.

US Patent Nos. 8,232,362 and 8,877,885 both describe approaches for replacing tin catalysts in these systems.

US 8,232,362 describes silyl-terminated polyethers made by capping a polyether polyol with a diisocyanate to form an isocyanate-terminated prepolymer. The prepolymer is then reacted with an aminosilane to produce the silyl-terminated polyether. In this reaction, each isocyanate group of the prepolymer reacts with the amine group of the aminosilane to form a urea linkage. US 8,232,362 describes several catalysts for that reaction, including bismuth, zinc, aluminum and titanium catalysts. Those catalysts can remain with the product and function as catalysts for the moisture cure. Alternatively, these catalysts can be added to the previously-formed silyl-terminated polyether. As shown in US 8,232,362, a titanium catalyst provided a very slow cure, and the cured polymer had poorer hardness, tensile strength and elongation than when a tin catalyst was used instead.

US 8,877,885 describes moisture-curable, urethane-group containing, silyl-terminated polyethers that are manufactured and cured using tin-free catalysts. Titanic acid esters such as tetrabutyl titanate and tetrapropyl titanate are among the materials mentioned as candidates for both the manufacturing and curing steps, although US 8,877,885 does not report experimental data for any titanium catalyst. The various examples of US 8,877,885 show that significant losses in physical properties are seen when the tin moisture-curing catalysts are replaced with other types, including zinc, cyclic amidine, boron trifluoride and dodecylbenzene sulfonic acid, in systems in which the urethane groups are aromatic types. In addition, cure rates become depressed in all cases, except when dodecylbenzene sulfonic acid is used as the catalyst for the moisture cure.

See also, for example, US2013096252, US2014100348 and US2014309372.

US 2013096252 provides for methods of producing a composition comprising a crosslinkable silane-terminated polymer having at least one crosslinkable silyl group in each molecule. The method comprises providing a polymer having at least one unsaturated group and at least one alcoholic hydroxyl group in each molecule, adding to the polymer a compound having a hydrogen-silicon bond and a crosslinkable silyl group in each molecule and a hydrosilylation catalyst to thereby carry out a hydrosilylation reaction to form a composition comprising hydrosilylated polyoxyalkylene polymers, reacting the hydrosilylated polyoxyalkylene polymers with at least one isocyanate in the presence of a first tin-free catalyst to form an isocyanate reacted hydrosilylated polymer; and optionally reacting the isocyanate reacted hydrosilylated polymer with a polyol having a nominal functionality of at least 2 to form a polyol reacted crosslinkable silane-terminated polymer.

US2014100348 provides methods of producing a composition comprising a crosslinkable silane-terminated polymer having at least one cross-linkable silyl group in each molecule. The method may comprise providing a polymer having at least one unsaturated group and at least one alcohol hydroxyl group in each molecule and having a number average molecular weight between about 100 and about 5,000, adding to the polymer a compound having a hydrogen-silicon bond and a crosslinkable silyl group in each molecule and a hydrosilylation catalyst to thereby carry out a hydrosilylation reaction to form a composition comprising hydrosilylated polymers, wherein the hydrosilylation reaction has a hydrosilylation efficiency greater than 50% as determined by 1H-NMR, capping the hydrosilylated polymers by adding the hydrosilylated polymer to at least one isocyanate at an index of between about 100 and about 250; and reacting the isocyanate capped hydrosilylated polymer with a polyol having a nominal functionality of at least 2 to form the composition comprising a crosslinkable silane-terminated polymer.

US2014309372 provides a copolymer-filled crosslinkable silane-terminated polymer having at least one crosslinkable silyl group in each molecule. The copolymer-filled crosslinkable silane-terminated polymer is the reaction product of a copolymer-filled polyol and an isocyanate capped hydrosilylated polymer. The isocyanate capped hydrosilylated polymer is the reaction product of at least one isocyanate and a hydrosilylated polymer. The hydrosilylated polymer is the reaction product of a polymer having at least one unsaturated group and at least one alcoholic group in each molecule and a compound having a hydrogen-silicon bond and a crosslinkable silyl group in each molecule. The copolymer-filled crosslinkable silane-terminated polymers exhibit improved modulus and tensile strength properties while maintaining elongation properties.

What is desired is a moisture-curable system that contains a moisture-curable, silyl-terminated, urethane-group-containing resin that cures rapidly to form a cured resin having good properties, and which exhibits good stability both before and after curing.

This invention is in one aspect a moisture-curable polysilylated polyether composition comprising
a) at least one urethane group-containing polysilylated polyether free of urea groups, having two or more hydrolysable silane groups per molecule and a number average molecular weight of 4,000 to 20,000; wherein said two or more hydrolysable silane groups are dialkoxysilyl and/or trialkoxysilyl groups, and wherein the urethane groups of the polysilylated polyether are aliphatic urethane groups; and
b) a catalytically effective amount of a catalyst selected from a titanium (IV) catalyst and a mixture of a zinc catalyst and a cyclic amidine catalyst,
the polysilylated polyether composition containing no more than 1000 parts by weight tin per million parts by weight of the polysilylated polyether.

Surprisingly and, in the case of the titanium catalysts, contrary to US 8,232,362, the titanium (IV) catalyst and zinc/cyclic amidine catalyst mixture each provides for a fast cure to produce a cured resin that has properties very similar to those produced using a tin-containing moisture-cure catalyst such as dibutyltin diacetylacetonate. With either of these catalyst systems, the moisture-curable polysilylated polyether composition is significantly more stable than when a tin moisture-cure catalyst is present. This advantage is particularly pronounced when the polysilylated polyether is made with an aliphatic polyisocyanate and therefore contains aliphatic urethane groups. The cured resin also is substantially more stable than when a tin moisture-cure catalyst is present.

Applicants have further found that aminosilane adhesion promoters, when present in the polysilylated polyether composition, interfere with the cure when a titanium (IV) catalyst is present. Accordingly, in a further aspect, the invention is a polysilylated polyether composition containing a titanium (IV) catalyst as described in the first aspect, which is devoid of aminosilane compounds. The polysilylated polyether composition in this aspect may contain an epoxy silane adhesion promoter.

The composition of the invention includes one or more urethane group-containing polysilylated polyethers that are free of urea groups, wherein the urethane groups of the polysilylated polyether are aliphatic urethane groups. The urethane group-containing polysilylated polyether(s) have a molecular weight of 4,000 to 20,000 g/mol. The polysilylated polyether(s) may have a molecular weight of at least 5,000 or at least 6,000, and may have a molecular weight of up to 15,000 or up to 13,000. These molecular weights and all other molecular and equivalent weights described herein are number average weights expressed as grams/mole, unless otherwise indicated. All molecular weights of polymeric materials are measured by gel permeation chromatography against a polystyrene standard. Equivalent weights are measured by titration methods.

The polysilylated polyether(s) have two or more hydrolysable silane groups per molecule. A hydrolysable silane group is a group containing a silicon atom and at least one hydrolysable substituent bonded to the silicon atom. The hydrolysable silane group of the polysilane compound(s) (component a)) may contain 1, 2 or 3 hydrolysable substituents. The hydrolysable silane groups preferably contain 2 or 3, most preferably 2, hydrolysable substituents. The silicon atom is bonded directly or indirectly to the polyether portion of the molecule through a non-hydrolysable linkage.

A hydrolysable substituent is one that reacts with water to eliminate the substituent and produce an Si-OH moiety, which can further react to form an -Si-O-Si- linkage. Hydrolysable substituents include halogen, particularly chlorine; alkoxy groups, particularly C₁₋₆ alkoxy and especially methoxy and ethoxy; phenoxy or ring-substituted phenoxy groups; acyloxy groups such as acetoxy; trialkyl siloxy groups, which may be substituted on one or more of the alkyl groups such as trimethyl siloxy and triethyl siloxy; triphenyl siloxy, which may be substituted on one or more of the phenyl rings; alkenyloxy groups such as isopropenyloxy; and ketoximato groups such as dimethylketoximato, diethylketoximato, dicyclohexylketoximato, and methylethylketoximato.

Examples of hydrolysable silane groups include trichlorosilyl, methyldichlorosilyl, dimethylchlorosilyl, phenyldichlorosilyl, (trimethylsiloxy) dimethylsilyl, trimethoxysilyl, triethoxysilyl, methyldiethoxysilyl, methyldimethoxysilyl, dimethylmethoxysilyl, diethylmethoxysilyl, phenyldimethoxysilyl, trimethylsiloxymethylmethoxylsilyl, trimethylsiloxydiethoxysilyl, methyl diacetoxysilyl, phenydiaectoxysilyl, triacetoxysilyl, trimethylsiloxymethylacetoxysilyl, trimethylsiloxydiacetoxysilyl, bis(dimethylketoximato)methylsilyl, bis(cyclohexylketoximato)methylsilyl, bis(diethylketoximato)trimethylsiloxysilyl, bis(methylethylketoximato)methylsilyl, tris(acetoximato)silyl, and methylisopropyenyloxysilyl.

In embodiments according to the invention the hydrolysable silane groups are dialkoxysilyl and/or trialkoxysilyl groups. The polysilylated polyether may have, for example, two or more dialkoxysilyl groups, two or more trialkoxysilyl groups, or at least one dialkoxylsilyl group and at least one trialkoxysilyl group.

Dialkoxysilyl and trialkoxysilyl groups have the respective structures: 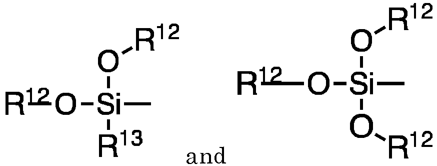 wherein each R¹² is alkyl, and each R¹³ is a non-hydrolysable group. Each R¹² may be, for example, methyl, ethyl, isopropyl, n-propyl, sec-butyl, t-butyl or n-butyl. Each R¹³ may be, for example, C₁-C₁₂ alkyl, phenyl, alkyl-substituted phenyl, or trialkylsiloxymethyl. R¹³ is preferably methyl, ethyl or trimethylsiloxyl.

In some embodiments, the polysilylated polyether(s) have, for example, at least 3 dialkoxysilyl and/or trialkoxysilyl groups per molecule. In specific embodiments, each polysilylated polyether has an average of 2 to 6, 3 to 6 or 3 to 4 dialkoxysilyl or / and trialkoxysilyl groups combined per molecule.

Suitable polysilylated polyether(s) include those made by processes described in US Patent No. 8,877,885. These process start with a polyether monol having terminal ethylenic unsaturation, such as a terminal allylic, propenyl or ethylenic group. The molecular weight of this monol may be, for example, 500 to 6000, but is preferably 500 to 2000. The monol is hydrosilylated by reaction of the ethylenic unsaturation with a silyl hydride that has hydrolysable groups, such as a dialkoxysilyl hydride or a trialkoxysilyl hydride. The hydrosilylation reaction produces a monosilylated polyether monol having one alcohol group and one hydrolysable silane group as described above. The polysilylated polyether can be formed by coupling this monosilylated polyether monol in one step by reaction with a polyisocyanate (preferably a diisocyanate), or in two steps by capping the alcohol group with a polyisocyanate (again preferably a diisocyanate) and then coupling the resulting isocyanate-capped monosilylated polyether with a polyol. Alternatively, a second hydrolysable silyl group can be introduced to the polyether by capping the alcohol group with an isocyanate-functional, hydrolysable silane compound.

The polyether monol having terminal ethylenic unsaturation used as the starting material in the processes described in US 8,877,885 is conveniently formed by adding one or more alkylene oxides to an ethylenically unsaturated alcohol such as, for example, vinyl alcohol, allyl alcohol, methallyl alcohol, trimethylolpropane monoallyl ether, trimethylolpropane diallyl ether, glycerol monoallyl ether, glycerol diallyl ether, hydroxyethyl acrylate, hydroxyethyl methacrylate or a hydroxyl-terminated polybutadiene. The alkylene oxide is preferably ethylene oxide, 1,2-propylene oxide, 1,2-butylene oxide or a mixture of any two or more thereof. The polyether monol most preferably is a polymer of 1,2-propylene oxide or a random and/or block copolymer of a mixture of 50-99.5 weight-% (preferably 70-99.5 weight-%) 1,2-propylene oxide and correspondingly 0.5-50 weight-% (preferably 0.5 to 30 weight-%) ethylene oxide.

A dialkoxysilyl hydride or trialkoxylsilyl hydride compound used to hydrosilylate the starting polyether monol may have one of the structures 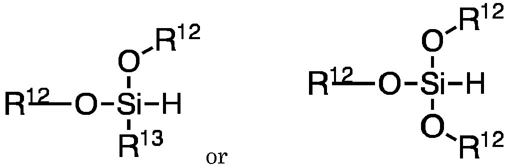 wherein R¹² and R¹³ are as described above. Examples of suitable dialkoxysilyl hydride or trialkoxylsilyl hydride compounds include trimethoxysilane, triethoxysilane, methyldiethoxysilane, methyldimethoxysilane, phenyldimethoxysilane, trimethylsiloxymethyldimethoxysilane, trimethylsiloxymethyldiethoxysilane and methyldisopropyloxysilane. Among these, methyldimethoxysilane, trimethoxysilane, methyldiethoxysilane and triethoxysilane are preferred on the basis of favorable reactivity and ease of handling.

The polyisocyanate used to cap or couple the monosilylated polyether monol may be aliphatic (*i.e.*, the nitrogen of the isocyanate group is bonded directly to an aliphatic carbon atom) or aromatic (*i.e.*, the nitrogen of the isocyanate group is bonded directly to an aromatic carbon atom). The polyisocyanate is preferably a diisocyanate, although polyisocyanate compounds having higher isocyanate functionalities can be used. Examples of useful aromatic polyisocyanates include toluene diisocyanate, diphenylmethane diisocyanate, 4,4'-biphenylene diisocyanate, methoxyphenyl-2,4-diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, naphthylene-1,5-diisocyanate, and *m*-phenylene diisocyanate. Examples of the preferred aliphatic polyisocyanates include hexamethylene-1,6-diisocyanate, tetramethylene-1,4-diisocyanate, cyclohexane-1,4-diisocyanate, hexahydrotoluene diisocyanate, and isophorone diisocyanate.

The monosilylated polyether monol is coupled by reaction of approximately stoichiometric quantities of the monol and the polyisocyanate, such that 0.75 to 1.5, preferably 0.9 to 1.1 or 0.95 to 1.05, equivalents of polyisocyanate are provided per mole of the monol. Urethane groups form through the reaction of the alcohol group of the monol with isocyanate groups of the polyisocyanate. When the polyisocyanate is aliphatic, aliphatic urethane groups are produced, and aromatic urethane groups are produced when the polyisocyanate is aromatic. The product of the coupling reaction is a polysilylated polyether.

To cap the monosilylated polyether monol with the polyisocyanate, the monol and polyisocyanate are combined in approximately equal molar quantities, such as approximately 0.75 to 1.5, preferably 0.8 to 1.1 or 0.85 to 1.05, moles of polyisocyanate per mole of monol. When reacted at such ratios, approximately one isocyanate group of the polyisocyanate reacts with each monol molecule to produce an isocyanate-capped species that contains one or more unreacted isocyanate groups. The isocyanate-capped species contains urethane groups, which are aliphatic urethane groups when the polyisocyanate is aliphatic and are aromatic urethane groups when the polyisocyanate is aromatic.

An isocyanate-capped monosilylated polyether polyol is then coupled by reaction with a polyol to form the product moisture-curable polysilylated polyether. Alcohol groups on the polyol react with isocyanate groups on the capped monosilylated polyether polyol to form the urethane group-containing polysilylated polyether.

The polyol used in such a coupling reaction may have, for example, 2 to 6, preferably 3 to 6 or 3 to 4, hydroxyl groups per molecule. The hydroxyl equivalent weight may be, for example, 100 to 10,000. A preferred polyol is a polyether polyol that nominally has 2 to 6, preferably 3 to 6 or 3 or 4, hydroxyl groups per molecule and a hydroxyl equivalent weight of 500 to 2500. The "nominal" number of hydroxyl groups of a polyether polyol refers to the number of oxyalkylatable sites on the initiator compound(s) used to make the polyether polyol. The actual number of hydroxyl groups per molecule tends to be somewhat lower than the nominal value due to side-reactions that occur in the manufacturing process. The hydroxyl equivalent weight of the polyether polyol may be, for example, 500 to 10,000, 1000 to 5,000 or 1300 to 2,500. The polyether polyol in some embodiments is a polymer of 1,2-propylene oxide or random and/or block copolymer of a mixture of 50-99.5 weight-% (preferably 70-99.5 weight-%) 1,2-propylene oxide and correspondingly 0.5-50 weight-% (preferably 0.5 to 30 weight-%) ethylene oxide.

The polyether polyol may be the continuous liquid phase of a "polymer polyol", which is a dispersion of polymer particles in a continuous liquid polyol phase. In such a case, the dispersed polymer particles may be at least partially grafted to some or all of the liquid polyol molecules. The "solids", *i.e.*, the weight of the dispersed polymer particles based on the total weight of the polymer polyol, may be, for example, 2 to 50%, preferably 5 to 40% by weight. The dispersed polymer particles may be polyurethane, polyurea, polyhydrazide, polystyrene, styrene-acrylonitrile, or the like. In determining hydroxyl equivalent weight of such a polymer polyol, the weight of the dispersed particles is not taken into account.

In some embodiments, polysilylated polyether is one or more compounds represented by the structure (I): 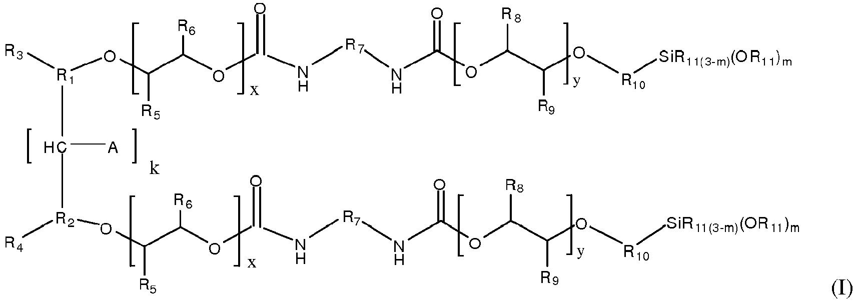 where A is either H or has the structure (II): 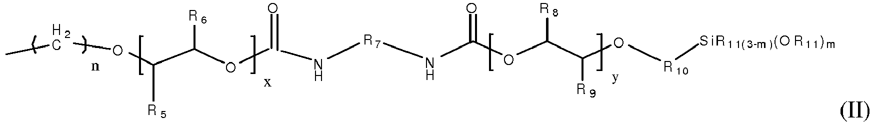 k is a number from 0 to 4, m and n are independently numbers from 0 to 3, the values of x and y are such that the compound has a molecular weight as described above, R₁, R₂, R₁₀ and Rn are independently straight chain or branched alkyl groups having 1 to 4 carbon atoms, R₃, R₄, R₅, R₆, R₈ and R₉ are independently hydrogen or straight chain or branched alkyl groups having 1 to 4 carbon atoms, and R₇ is aliphatic, cycloaliphatic, bis-benzylic and/or aromatic and has 2 to 20 carbon atoms.

In preparing the polysilylated polyether, various urethane catalysts (*i.e.*, catalysts for the reaction between an alcohol and an isocyanate group) may be present during the urethane-forming reactions, such as the isocyanate capping and coupling reactions described above. Such catalysts may include, for example, one or more metallic catalysts including one or more tin, zinc, bismuth or other catalysts. Residues of such catalysts may remain in the polysilylated polyether, provided that the tin content of the polysilylated polyether is no more than 1000 ppm, preferably no more than 600 ppm. Tin catalyst residues in such small amounts are generally very poor catalysts for the moisture cure of the silyl groups.

In some embodiments, the moisture-curable polysilylated polyether composition of the invention includes at least one titanium (IV) catalyst. The titanium (IV) catalyst in some embodiments is a titanate compound. Such a titanate compound may be represented by the structure: 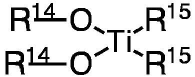 wherein each R¹⁴ is independently alkyl, phenyl or alkyl-substituted phenyl, and each R¹⁵ is alkoxy, phenoxy, alkyl-substituted phenoxy, a 1,3-diketone compound bonded to the central titanium atom through an oxygen atom, or other ligand preferably bonded to the central titanium atom through an oxygen atom. Each R¹⁴ may be, for example, methyl, ethyl, n-propyl, isopropyl, n-butyl, sec-butyl or t-butyl. Each R¹⁵ may be, for example, methoxyl, ethoxyl, n-propoxyl, isopropoxyl, n-butoxyl, sec-butoxyl, t-butoxyl, phenoxyl, acetoacetate, methyl acetoacetate or ethyl acetoacetate, or an enolate ion such as acetylacetonate (2,4-pentanedionyl) or other enol of a β-dione. Specific examples of useful titanate compounds include tetramethoxy titanate, tetraethoxy titanate, tetraisopropoxy titanate, dialkoxy titanium bis(acetoacetates) in which the alkoxy groups are independently methoxyl, ethoxyl and isopropoxyl, dialkoxy titanium bis(ethylacetoacetonates) in which the alkoxy groups are independently methoxyl, ethoxyl or isopropoxyl, and other dialkoxy titanium bis alkylacetoacetonates in which the alkoxy groups are independently methoxyl, ethoxyl or isopropoxyl.

The titanium catalyst is present in a catalytically effective amount. The polysilylated polyether composition may contain, for example, 0.1 to 5, preferably 0.25 to 2 and more preferably 0.5 to 1.5 parts by weight of the titanium catalyst per 100 parts by weight of polysilylated polyethers.

In other embodiments, the moisture-curable polysilylated polyether composition of the invention includes at least one zinc catalyst and at least one cyclic amidine catalyst.

The zinc catalyst may be, for example, a zinc carboxylate, *i.e.*, a zinc salt of one or more carboxylic acids. The carboxylic acid is preferably a monocarboxylic acid having 2 to 24, preferably 2 to 18, more preferably 6 to 18 and especially 8 to 12, carbon atoms. A mixture of carboxylates may be present. All or a portion of the zinc carboxylate catalyst may engage in a rearrangement to form species which contain Zn-O-Zn linkages. These species are considered as zinc carboxylates for purposes of this invention.

Another suitable type of zinc catalyst is a zinc enolate salt, wherein the enolate ion(s) have five to 12 carbon atoms and may be linear or cyclic. Such zinc enolates include, for example, zinc acetylacetonate and zinc salts of other 2,4-alkane diones or a cycloaliphatic 1,3-dione.

The zinc salt is used in combination with a cyclic amidine catalyst. Suitable cyclic amidine catalysts include those represented by the structure: 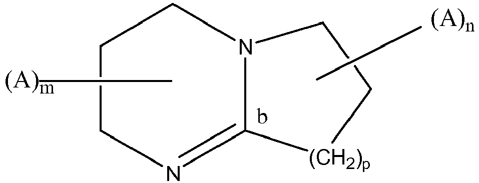 wherein each A is a group bonded to a ring carbon atom and contains a non-protic nucleophilic group. In structure I, m and n are each independently zero or a positive integer. m+n equals zero or a greater positive integer. m+n preferably equals 0, 1 or 2 and more preferably equals 0 or 1. p is zero or a positive number, preferably 1, 2 or 3 and more preferably 3.

Any A group as may be present should be devoid of hydrogen atoms that are reactive towards hydroxyl groups and isocyanate groups. The A substituent(s) (if present) may be, for example, a tertiary phosphine or tertiary amino group, with substituents containing a tertiary amino group being preferred. The nitrogen atom of an amino group or phosphorus atom of a phosphine group may be bonded directly to a carbon atom of the ring structure. Alternatively, the amine nitrogen or phosphine phosphorus atom may be indirectly bonded to a carbon atom of the ring structure through some bridging group which may be, for example, alkylene or other hydrocarbyl group. The A group may take the form -(CH₂)ₓN(R)₂ or -(CH₂)ₓP(R)₂, wherein x is from 0 to 6, preferably 0, 1 or 2, more preferably 0, and each R is independently an alkyl group, inertly substituted alkyl group, phenyl group, or inertly substituted phenyl group. When x is 0, a tertiary amino or phosphine group is bonded directly to a ring carbon. An "inert" substituent is one that is not reactive towards hydrolysable silane groups. The R groups preferably each contain from 1 to 16, more preferably from 1 to 8 carbon atoms. Most preferred R groups are alkyl groups that contain from 2 to 4 carbon atoms. The two R groups may also form a ring structure that includes the nitrogen or phosphorus atom to which they are attached. Such a ring structure may include one or more heteroatoms such as ether oxygen atoms or nitrogen atoms, but as before such a ring structure should be devoid of groups that are reactive towards hydrolysable silane groups.

Specific cyclic amidine catalysts include 1,8-diazabicyclo[5.4.0]undec-7-ene (DBU) and 6-(dibutylamino)-1,8-diazabicyclo[5.4.0]undec-7-ene, where the butyl group may be n-butyl, sec-butyl or t-butyl.

The zinc and cyclic amidine catalysts are present in catalytically effective amounts. The polysilylated polyether composition may contain, for example, 0.1 to 5, preferably 0.25 to 2 and more preferably 0.5 to 1.5 parts by weight of the zinc catalyst per 100 parts by weight of polysilylated polyethers, and 0.1 to 3, preferably 0.25 to 1.5 and more preferably 0.5 to 1.5 parts by weight of the cyclic amidine catalyst per 100 parts by weight of the polysilylated polyethers.

When a titanium (IV) catalyst is present, it is preferred to omit the cyclic amidine catalyst.

The catalyst(s) and polysilylated polyether can be combined by simple mixing methods. Alternatively, the catalyst(s) may be present during one or more of the synthetic steps used to prepare the polysilylated polyether, and the residues thereof left in the product.

The moisture-curable polysilylated polyether composition of the invention may contain various other ingredients, in addition to the polysilylated polyether and catalyst(s) described above.

One such other ingredient is an adhesion promoter. A particularly useful type of adhesion promoter is an epoxy silane compound. An epoxysilane compound for purposes of this invention is one having at least one silicon atom bonded to one or more hydrolysable substituents (such as alkoxyl or phenoxyl groups), and at least one epoxy group bonded to the silicon atom through a non-hydrolyzable substituent. The epoxysilane should be devoid of primary or secondary amino groups. Examples of epoxysilane adhesion promoters include, beta-(3,4-epoxycyclohexyl)ethyltrimethyoxysilane and gamma-glycidoxypropyletrimethoxysilane, which are sold respectively as Silquest™ A-186 and Silquest™ A-187 by Momentive Performance Materials, Inc. An epoxy silane compound may constitute, for example, 0.25 to 2%, especially 0.5 to 1% of the total weight of the moisture-curable polysilylated polyether composition.

The moisture-curable polysilylated polyether composition preferably is essentially devoid of an aminosilane compound, by which it is meant a silane compound having one or more primary or secondary amino groups. The moisture-curable polysilylated polyether composition preferably contains no more than 0.25 weight percent of such compounds, preferably no more than 0.05 weight percent thereof and more preferably no more than 0.01 weight percent thereof. The composition may contain no such compounds.

The moisture-curable polysilylated polyether composition may contain one or more particulate fillers. When present, the amount of particulate fillers may constitute at least 10, at least 15% or at least 25%, of the total weight of the moisture-curable polysilylated polyether composition, and may constitute as much as 75% or as much as 50% thereof by weight.

The filler may be, for example, glass, sand, clay, calcium carbonate, mica, metal particles, silicon dioxide, talc, titanium dioxide wollastonite, fly ash, various forms of carbon or graphite, or other inorganic material. Any of such fillers may be surface-modified with, for example, a coupling agent such as an epoxy silane as described above, or other surface treatment. The filler preferably is in the form of particles that have a largest dimension of 50 nm to 100 µm. The particles may have an aspect ratio (ratio of longest to shortest dimension) of, for example, 1 to 10, 1 to 5 or 1 to 2. Some fillers may perform specialized functions in the moisture-curable polysilylated polyether composition. For example, titanium dioxide and other mineral fillers may function as colorants or brighteners.

The moisture-curable polysilylated polyether composition may contain one or more low molecular weight polysilylated polyethers that are free of urea groups. The low molecular weight polysilylated polyether(s) in each case has an average of 1.8 to 4 terminal hydrolysable silyl groups per molecule, and a number average molecular weight of 1000 to less than 4000. The molecular weight may be at least 1,200 or at least 1,500, and may be up to 3,000 or up to 2,500. The low molecular weight polysilylated polyether(s) may have, for example, an average of 1.8 to 4, 1.8 to 3, 1.8 to 2.5 or 1.8 to 2.2 hydrolysable silyl groups per molecule. If present, the low molecular weight polysilylated polyether may constitute 50 to 5 weight percent of the combined weights of all polysilylated polyethers in the composition.

The low molecular weight polysilylated polyether(s) is in some embodiments a reaction product of i) a linear monosilylated polyether monol having a terminal hydroxyl group, a terminal hydrolysable silyl group and a molecular weight of 250 to 1500 and ii) a coupling agent having at least two groups reactive with hydroxyl groups and a molecular weight of up to 500. The linear monosilylated polyether monol can be made by silylating a starting polyether monol having an ethylenically unsaturated group, as described before. The coupling agent may have, for example, two or more isocyanate, carboxylic acid, carboxylic acid halide or epoxide groups. It preferably has an average of 1.8 to 4, 1.8 to 3, 1.8 to 2.5 or 1.8 to 2.2 groups that react with hydroxyl groups. The ratio of coupling agent to monosilylated polyether monol may be such that approximately one equivalent (such as from 0.8 to 1.25 equivalents, 0.9 to 1.1 equivalents, 0.95 to 1.05 equivalents or 0.98 to 1.02 equivalents) of hydroxyl-reactive groups are provided by the coupling agent per equivalent of hydroxyl groups provided by the monosilylated polyether monol. The coupling reaction is performed such that the hydroxyl-reactive groups of the coupling agent are consumed by reaction with hydroxyl groups of the monosilylated polyether monol to form the second polysilylated polyether. Reaction conditions are selected such that this coupling reaction occurs and in any particular case will depend to some extent on the particular hydroxyl-reactive groups. Reaction conditions may include, for example, an elevated temperature, the presence of a catalyst, the removal of reaction by-products (if any) and the like.

The low molecular weight polysilylated polyether in some embodiments is one or more compounds represented by the structure 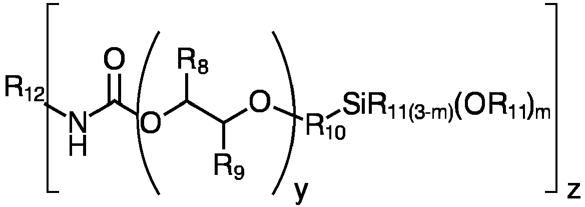 wherein R₈, R₉, R₁₀, R₁₁ are independently straight chain or branched alkyl groups having 1 to 4 carbon atoms, y is a number such that the molecular weight of the second silylated polyether is 1000 to less than 4000, R₁₂ is the residue, after removal of isocyanate groups, of a polyisocyanate having z isocyanate groups and a molecular weight of up to 500, and z has an average value of 1.8 to 4.

The moisture-curable polysilylated polyether composition may contain one or more solvents, diluents and/or plasticizers if desired to, for example, adjust its viscosity and/or other rheological properties to a desired specification. The composition may contain one or more of a colorant; a preservative; a biocide; an antioxidant; a light-stabilizer; and/or one or more other polymers.

The moisture-curable polysilylated polyether composition contains no more than 1000 ppm, preferably no more than 600 ppm of tin, more preferably no more than 200 ppm of tin, based on the weight of the urethane group-containing polysilylated polyether. The moisture-curable polysilylated polyether composition may contain any smaller amount of tin, or none at all. If tin is present, it is preferred that such tin is the residue of a urethane catalyst used to produce the urethane group-containing polysilylated polyether, rather than being a separately added material.

The moisture-curable polysilylated polyether composition of the invention is useful as a coating, sealant, caulk or adhesive. The composition can be applied to a substrate in any useful way, and cured in place to form an adherent bond to the substrate. It is generally desirable that the formulated curable composition has a viscosity of 5 to 1000 Pa·s, so it resists running off under force of gravity or washing off until it has cured. In specific embodiment, the viscosity is up to 500 or up to 300 Pa·s. The substrate may be any material to which the cured composition forms an adhesive bond. If formulated as an adhesive, the curable composition is applied between two substrates that are to be bonded. If formulated as a sealant or caulk, the curable composition is applied at a joint or crack in a substrate or at the junction between two or more substrates where sealing is desired. It is often convenient to package the adhesive into a tube, cartridge or other container, and to apply the adhesive from the container using a caulking gun or similar apparatus.

A significant advantage of the present invention is that the moisture-curable polysilylated polyether composition has excellent storage stability. Compared to an otherwise like composition that contains a tin moisture-curing catalyst instead of the titanium (IV) catalyst or zinc/cyclic amidine catalyst mixture of this invention, the compositions are far less prone to degradation during storage. This advantage is especially pronounced when the urethane groups of the polysilylated polyether are aliphatic.

Curing is performed by exposing the composition to water, which can be present in liquid form or as water vapor. The water may be supplied in the form as atmospheric moisture. The curing reaction proceeds spontaneously at room temperature in most cases; however, elevated temperatures may be used to speed the cure if desired.

A second significant advantage of the invention is that the cured composition has significantly greater thermal stability, compared to an otherwise like composition that contains a tin moisture-curing catalyst instead of the titanium (IV) catalyst or zinc/cyclic amidine catalyst mixture of the invention.

The following examples are provided to illustrate the invention, but are not intended to limit the scope thereof. All parts and percentages are by weight unless otherwise indicated. In the following Examples:
Polysilylated Polyether A has approximately three terminal hydrolysable silyl groups per molecule and a number average molecular weight of 9000. It is free of urea groups. Polysilylated Polyether A is made by silylating an ethylenically unsaturated 800 molecular weight polyether monol by reaction with HSiCH₃(OCH)₂ in the presence of a platinum catalyst, then capping the resulting monosilylated polyether monol with toluene diisocyanate, followed by coupling the capped material by reaction with a polyether polyol nominally having 3 hydroxyl groups per molecule and a hydroxyl equivalent weight of about 2040.

Polysilylated Polyether B is made in the same way as Polysilylated Polyether A, except the toluene diisocyanate is replaced with an equal molar quantity of isophorone diisocyanate. It has about 3 hydrolysable silane groups per molecule and a number average molecular weight of 9000.

Polysilylated Polyether C has approximately two terminal hydrolysable silane groups per molecule and a number average molecular weight of 10,000. It is made in the same way as Polysilylated Polyether B, except the polyether polyol used in the final coupling reaction is a diol having a hydroxyl equivalent weight of about 4000.

Each of Polysilylated Polyethers A, B and C contains 200-600 ppm of residues of a tin catalyst used in the isocyanate-capping step and subsequent coupling reaction. Without added moisture-curing catalyst, these polysilylated polyethers do not cure in 7 days at room temperature/50% relative humidity.

Zinc Catalyst A is a zinc carboxylate commercially available as K-Kat 670 from King Industries.

### Example 1 and Comparative Samples A and B

Comparative Sample A is prepared by mixing 0.5 parts of dibutyltindi(acetylacetone) into 100 parts of Polysilylated Polyether B using a high-speed mixer.

Comparative Sample B is prepared by mixing 1.5 parts of dibutyltindi(acetoacetone) into 100 parts of Polysilylated Polyether B using a high-speed mixer.

Example 1 is prepared by mixing 1 part of diisopropyltitanium(IV)bis(ethylacetoacetone) into 100 Parts of Polysilylated Polyether B using a high-speed mixer.

Example 1, Comparative Sample A and Comparative Sample B each are divided into several samples. In each case, one of the samples is evaluated immediately after preparation for curing time and mechanical properties (tensile strength, elongation at break and stress at 100% elongation). Other samples are aged under nitrogen in a sealed container at 65°C for various times as indicated in Table 1 below before being cast into films and evaluated for curing time and mechanical properties.

In each case, curing time is measured by casting a ∼3 mil (76.2 µm) film on a glass substrate from about 1 mL of the material. The film is cured at room temperature under ambient humidity for one week. Tack-free time of the film is measured using a BYK drying time recorder.

Mechanical properties are measured on thin films of the cured material according to ASTM D-1708. Films are prepared by casting a 25 mil (635 µm) film onto a polypropylene substrate and curing at room temperature and ambient humidity for one week. Dogbone samples for analysis are cut from the cured films.

Results of the testing of Example 1 and Comparative Samples A and B are as indicated in Table 1.

**Table 1**

| | Comp. Sample A* | | | Comp. Sample B* | | Ex. 1 | | | |
|---|---|---|---|---|---|---|---|---|---|
| Catalyst type, amount (pphr) | Tin, 0.5 | | | Tin, 1.5 | | Titanium, 1 | | | |
| Pre-cure Aging Time, weeks¹ | None | 1 | 3 | None | 1 | None | 1 | 3 | 4 |
| Tack Free Time, hr. | 2.5 | 1.5 | 4.75 | 1.5 | 2.5 | 2 | 1 | ND | 0.75 |
| Tensile Str., psi (kPa) | 113 (779) | 89 (614) | 28 (193) | 136 (938) | 35 (241) | 113 (779) | 126 (869) | 106 (731) | 103 (710) |
| Elongation at Break, % | 179 | 254 | 422 | 193 | 378 | 190 | 277 | 306 | 307 |
| Stress at 100% strain, psi (kPa) | 73 (503) | 39 (269) | 8 (55) | 80 (552) | 12 (83) | 68 (469) | 57 (393) | 44 (303) | 40 (276) |

| | | | | | | | | | |
|---|---|---|---|---|---|---|---|---|---|
| ¹Storage time of the uncured material under nitrogen at 65°C, prior to curing and evaluation. | | | | | | | | | |

Comparative Samples A and B show the effect of a tin moisture-curing catalyst on a polysilylated polyether made with an aliphatic polyisocyanate (isophorone diisocyanate) and therefore contains aliphatic urethane groups. In each case, aging has a strong adverse effect on the properties of the material when it is eventually cured. Comparative Sample A loses 75% of its ultimate tensile strength when aged three weeks before curing. Comparative Sample B, with its higher loading of tin catalyst, degrades even faster. By contrast, Example 1 shows little degradation even after four weeks of aging prior to cure. It loses less than 10% of its ultimate tensile strength (after curing) when aged 4 weeks prior to being cured.

Fresh samples of Comparative Sample A and Example 1 are prepared and immediately formed into cured films for mechanical property testing as described above. Multiple films are prepared in each case. In each case, mechanical properties are measured on some of the films immediately after curing. Other film samples are heat-aged for one week at either 100°C or 110°C prior to testing. Results are as indicated in Table 2.

**Table 2**

| Designation | Comp. Sample A | | | Example 1 | | |
|---|---|---|---|---|---|---|
| Catalyst type | Tin | | | Titanium | | |
| Cured film aging Conditions | None | 100°C, 1 week | 110°C, 1 week | None | 100°C, 1 week | 110°C, 1 week |
| Tensile strength, psi (kPa) | 130 (896) | 96 (662) | 67 (462) | 130 (896) | 148 (1020) | 133 (917) |
| Elongation at break, % | 229 | 267 | 371 | 234 | 229 | 222 |
| Stress at 100% strain, psi (kPa) | 66 (455) | 40 (276) | 21 (145) | 67 (462) | 79 (545) | 72 (496) |

Films made from Comparative Sample A, which contains the tin catalyst, degrade very substantially when heat aged. Tensile strength loss in only one week is 27% at 100°C and approximately 50% at 110°C. Example 1 shows no loss of tensile strength at all when aged. The physical properties remain remarkably unchanged when the Example 1 films are heat-aged.

### Example 2 and Comparative Sample C

Comparative Sample C is prepared by mixing 0.5 parts of dibutyltindi(acetylacetone) into 100 parts of Polysilylated Polyether A using a high-speed mixer.

Example 2 is prepared by mixing 1 part of diisopropyltitanium(IV)bis(ethylacetonate) into 100 Parts of Polysilylated Polyether A using a high-speed mixer.

Films are prepared from each of Comparative Sample C and Example 2 immediately after the samples are prepared. Duplicate films are made and cured as described in the previous example. Film samples are tested immediately after curing, and on duplicate film samples that are heat aged for 1 week at either 90°C or 100°C. Results are as indicated in Table 3.

**Table 3**

| Designation | Comp. Sample C | | | Example 2 | | |
|---|---|---|---|---|---|---|
| Catalyst type | Tin | | | Titanium | | |
| Cured film aging Conditions | None | 90°C, 1 week | 100°C, 1 week | None | 90°C, 1 week | 100°C, 1 week |
| Tensile strength, psi (kPa) | 136 (938) | 35 (241) | ND¹ | 135 (931) | 118 (814) | 154 (1062) |
| Elongation at break, % | 236 | 223 | ND¹ | 247 | 210 | 284 |
| Stress at 100% strain, psi (kPa) | 70 (483) | 16 (110) | ND¹ | 63 (434) | 70 (483) | 65 (448) |

| | | | | | | |
|---|---|---|---|---|---|---|
| ¹The film turns brown and degrades so much meaningful physical properties cannot be measured. | | | | | | |

When the polysilylated polyether is made using an aromatic polyisocyanate (TDI) and therefore contains aromatic urethane groups, the addition of a tin catalyst renders the films even more susceptible to thermal degradation. The films with the tin catalyst lose about 75% of their tensile strength after 1 week at only 90°C. Complete degradation of the film occurs after 1 week at 100°C. Example 2, which contains the titanium catalyst, is heat stable at both of the aging temperatures.

When samples of Comparative Sample C and Example 2 are aged one week at 65°C before they are cured, they no longer cure well enough to obtain meaningful measurements of tack free time or physical properties.

### Example 3 and Comparative Samples D, E and F

Fully formulated sealant compositions are prepared by mixing the following ingredients:

| Ingredient | Parts by Weight |
|---|---|
| Polysilylated Polyether C | 5.44 |
| Polysilylated Polyether B | 1.81 |
| Calcium Carbonate | 11.6 |
| Diisononyl phthalate | 4.38 |
| Titanium dioxide | 0.63 |
| Light stabilizer | 0.1 |
| Vinyl silane moisture scavenger | 0.2 |
| Adhesion promoter¹ | 0.18 |
| Catalyst² | 0.3 or 0.6 |

| | |
|---|---|
| ¹The adhesion promoter for Example 3 and Comparative Sample F is an epoxy silane. The adhesion promoter for Comparative Samples D and E is an amino silane. ²0.3 parts of dibutyltinbis(acetylacetone) are used in Comparative Samples E and F; 0.6 parts of diisopropoxy titanium(IV) di(ethylacetoacetone) in Example 3 and Comparative Sample D. | |

Each of these formulated sealants is divided into several samples. In each case, one of the samples is cured immediately after preparation. Other samples are aged under nitrogen in a sealed container at 65°C for 1 week or two weeks before being cast into films and evaluated for curing time and mechanical properties. Curing time and mechanical properties are measured in the manner described with respect to Example 1.

Results for Comparative Samples E and F and Example 3 are as indicated in Table 4. Comparative Sample D contains the titanium catalyst and the amino silane adhesion promoter. It does not cure even after 7 days, and no physical property measurements can be obtained. The results from Comparative Sample D indicate that the aminosilane is interfering with the cure, likely because it is a poison for the titanium catalyst.

**Table 4**

| | Comp. Sample E* | | Comp. Sample F* | | | Ex. 3 | | |
|---|---|---|---|---|---|---|---|---|
| Adhesion Promoter | Aminosilane | | Epoxy Silane | | | Epoxy Silane | | |
| Catalyst type, amount (wt.-%) | Tin, 1.2 | | Tin, 1.2 | | | Titanium, 2.4 | | |
| Aging Time, weeks¹ | None | 1, 2 | None | 1 | 2 | None | 1 | 2 |
| Tack Free Time, hr. | 2.5 | No cure | 2 | > 1 week | No cure | <24 | 1.75 | 2.75 |
| Tensile Str., psi (kPa) | 168 (1158) | ND | 139 (958) | 17 (117) | ND | 149 (1027) | 66 (455) | 52 (359) |
| Elongation at Break, % | 584 | ND | 632 | 633 | ND | 432 | 262 | 250 |
| Stress at 100% strain, psi (kPa) | 47 (324) | ND | 42 (290) | 2 (14) | ND | 67 (462) | 28 (193) | 24 (165) |

| | | | | | | | | |
|---|---|---|---|---|---|---|---|---|
| ¹Storage time of the uncured material at 65°C, prior to curing and evaluation. ND-not determined because of failure to cure. | | | | | | | | |

The formulations with the tin catalyst degrade rapidly with heat aging, and become unable to cure. Example 3, by contrast, is much more stable to heat aging, retaining its ability to cure to produce a sealant having useful properties. The results of Example 3 in comparison with Comparative Sample D demonstrate the effect of the choice of adhesion promoter. The epoxy silane promoter does not adversely affect the titanium catalyst, while the amino silane material renders the material unable to cure.

### Examples 4-6 and Comparative Sample G

Comparative Sample G is prepared by mixing 0.5 parts of dibutyltindi(acetylacetone) and 0.5 parts of 1,8-diazabicyclo[5.4.0]undec-7-ene (DBU) into 100 parts of Polysilylated Polyether B using a high-speed mixer.

Example 4 is prepared by mixing 2 parts of Zinc Catalyst A and 1 part of DBU into 100 Parts of Polysilylated Polyether B using a high-speed mixer.

Example 5 is prepared by mixing 1 part of Zinc Catalyst A and 1 part of DBU into 100 Parts of Polysilylated Polyether B using a high-speed mixer.

Example 6 is prepared by mixing 1 part of diisopropyltitanium(IV)bis(ethylacetoacetone) and 1 part of DBU into 100 parts of Polysilylated Polyether B using a high-speed mixer.

Each of Examples 4-6 and Comparative Sample G are divided into samples and cured at room temperature and ambient humidity for one week, either immediately, or after heat-aging the uncured samples for 1 week at 65°C under nitrogen. Some films that are cured immediately after preparation are heat-aged for 1 week at 110°C. Mechanical properties are evaluated as described for Example 1 and Comparative Sample A.

Results of the testing are as indicated in Tables 5 and 6. For comparison, the results for Example 1 and Comparative Sample A are repeated.

**Table 5-Results of Cured Films Prior to Heat-Aging the Films**

| Sample | Catalyst | Pre-cure Aging Time | Tack-free time, hr. | Tensile Str., psi (kPa) | Elongation at break, % | Stress at 100% elongation, psi (kPa) |
|---|---|---|---|---|---|---|
| Comp. A | Tin | None | 2.5 | 113 (779) | 179 | 73 (503) |
| Comp. A | Tin | 1 week | 1.5 | 89 (614) | 254 | 39 (269) |
| Comp. G | Tin/DBU | None | 0.5 | 148 (1020) | 236 | 70 (483) |
| Comp. G | Tin/DBU | 1 week | 0.8 | 42 (290) | 305 | 14 (97) |
| Ex. 4 | 2% Zinc A/ DBU | None | 1.7 | 109 (752) | 260 | 52 (359) |
| Ex. 4 | 2% Zinc A/DBU | 1 week | 2 | 102 (703) | 293 | 44 (303) |
| Ex. 5 | 1% Zinc A/DBU | None | 4 | 127 (876) | 265 | 57 (393) |
| Ex. 5 | 1% Zinc A/DBU | 1 week | 6.5 | 104 (717) | 246 | 50 (345) |
| Ex. 1 | Titanium | None | 2 | 113 (779) | 190 | 68 (469) |
| Ex. 1 | Titanium | 1 week | 1 | 126 (869) | 277 | 57 (393) |
| Ex. 6 | Ti/DBU | None | 1.8 | 144 (993) | 246 | 70 (483) |
| Ex. 6 | Ti/BDU | 1 week | 4.25 | 98 (676) | 223 | 51 (352) |

As before, the fresh (no aging) vs. 1 week aging data for Comparative Sample A shows that the tin catalyst degrades the resin performance when the resin mixture is heat-aged before curing. The data for Comparative Sample G shows that adding the cyclic amidine to the tin catalyst leads to poorer properties, and does not remedy the heat-aging problem.

The data for Examples 4-5 for the immediately-cured samples show that the zinc/DBU catalyst system results in cured film properties quite similar to those of the control (Comparative Sample A). Surprisingly, and in contract to Comparative Sample A, very little loss in properties is seen when Examples 4-5 are heat-aged for one week before curing. The presence of the cyclic amidine (DBU) provides a distinct benefit when used in conjunction with the zinc catalyst, which it does not provide when used together with a tin catalyst.

In Example 6, the DBU catalyst is used in conjunction with the titanium catalyst. When the freshly prepared sample is cured, the presence of the DBU catalyst enhances tensile properties, compared to Example 1. When the resin is heat-aged before curing, the presence of DBU in conjunction with the titanium leads to a loss of properties that is not seen when the titanium catalyst is used alone. This underscores the unexpected results seen with the combination of the zinc catalyst with the DBU.

**Table 6-Film Properties Before and After Heat-Aging**

| Sample | Catalyst | Tensile Str., psi (kPa) | | Elongation at break, % | | Stress at 100% elongation, psi (kPa) | |
|---|---|---|---|---|---|---|---|
| | | Not heat-aged | Heat-aged | Not heat-aged | Heat-aged | Not heat-aged | Heat-aged |
| Comp. A | Tin | 113 (779) | 67 (462) | 179 | 371 | 73 (503) | 21(145) |
| Comp. G | Tin/DBU | 148 (1020) | 61 (421) | 236 | 443 | 70 (483) | 13 (90) |
| Ex. 4 | 2% Zinc A/ DBU | 109 (752) | 126 (869) | 260 | 287 | 52 (359) | 54 (372) |
| Ex. 5 | 1% Zinc A/DBU | 127 (877) | 119 (821) | 265 | 240 | 57 (393) | 53 (365) |
| Ex. 1 | Titanium | 113 (779) | 133 (917) | 190 | 222 | 68 (469) | 72 (496) |
| Ex. 6 | Ti/BDU | 144 (993) | 130 (897) | 246 | 228 | 70 (483) | 69 (476) |

As before, heat-aging the tin-catalyzed films lead to very large degradation of tensile properties. Adding DBU to the tin-catalyzed formulation does not solve this problem.

The zinc catalyst/DBU catalyst mixture leads to cured films that retain their properties very well after heat-aging the cured films.

The titanium-catalyzed films are also quite heat-stable. The addition of the DBU has at most a small adverse effect on heat-stability of the titanium-catalyzed films.

## Claims

1. A moisture-curable polysilylated polyether composition comprising
a) at least one urethane group-containing polysilylated polyether free of urea groups, having two or more dialkoxysilyl and/or trialkoxysilyl groups per molecule and a number average molecular weight of 4,000 to 20,000; wherein the urethane groups of the polysilylated polyether are aliphatic urethane groups; and
b) a catalytically effective amount of a catalyst selected from a titanium (IV) catalyst and a mixture of a zinc catalyst and a cyclic amidine catalyst;
the polysilylated polyether composition containing no more than 1000 parts by weight tin per million parts by weight of the polysilylated polyether.

2. The moisture-curable polysilylated polyether composition of claim 1, wherein the polysilylated polyether contains two or more dialkoxysilyl groups per molecule, optionally wherein the dialkoxysilyl groups are alkyldimethoxylsilyl or alkyldiethyoxysilyl groups.

3. The moisture-curable polysilylated polyether composition of any preceding claim, which is devoid of aminosilane compounds and/or which contains an epoxysilane compound.

4. The moisture-curable polysilylated polyether composition of any preceding claim wherein component a) has a number average molecular weight of 6000 to 13,000 and 3 to 4 hydrolysable silyl groups per molecule.

5. The moisture-curable polysilylated polyether composition of any preceding claim wherein component a) is one or more compounds represented by the structure (I): 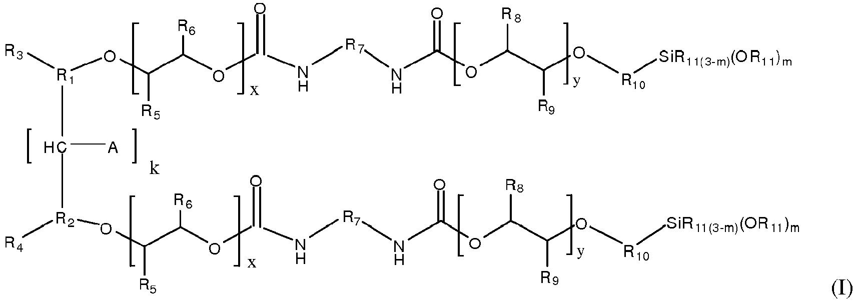 where A is either H or has the structure (II): 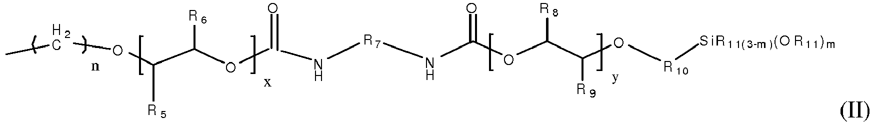 k is a number from 0 to 4, m and n are independently numbers from 0 to 3, the values of x and y are numbers such that the compound has a number average molecular weight of 4000 to 20,000, R₁, R₂, R₁₀ and R₁₁ are independently straight chain or branched alkyl groups having 1 to 4 carbon atoms, R₃, R₄, R₅, R₆, R₈ and R₉ are independently hydrogen or straight chain or branched alkyl groups having 1 to 4 carbon atoms, and R₇ is aliphatic, cycloaliphatic, bis-benzylic and/or aromatic and has 2 to 20 carbon atoms.

6. The moisture-curable polysilylated polymer composition of any preceding claim, further comprising c) one or more low molecular weight polysilylated polyethers which are free of urea groups, have an average of 1.8 to 4 terminal hydrolysable silyl groups per molecule and have a molecular weight of 1000 to less than 400.

7. The moisture-curable polysilylated polyether composition of claim 6 wherein component c) is one or more compounds represented by the structure 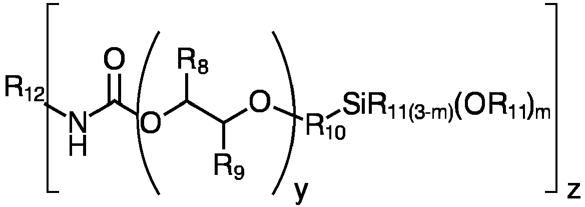 wherein R₈, R₉, R₁₀, R₁₁ are independently straight chain or branched alkyl groups having 1 to 4 carbon atoms, y is a number such that the molecular weight of the second silylated polyether is 1000 to less than 4000, R₁₂ is the residue, after removal of isocyanate groups, of a polyisocyanate having z isocyanate groups and a molecular weight of up to 500, and z has an average value of 1.8 to 4.

8. The moisture-curable polysilylated polyether composition of claim 6 or 7 wherein component c) has a molecular weight of 1200 to 3000 and an average of 1.8 to 2.5 hydrolysable silyl groups per molecule.

9. The moisture-curable polysilylated polyether composition of any preceding claim which further comprises at least one mineral filler.

10. The moisture-curable polysilylated polyether composition of any preceding claim wherein the catalyst includes at least one titanium catalyst represented by the structure: 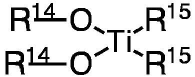 wherein each R¹⁴ is independently alkyl, phenyl or alkyl-substituted phenyl, and each R¹⁵ is alkoxy, phenoxy, alkyl-substituted phenoxy, a 1,3-diketone compound bonded to the central titanium atom through an oxygen atom, or another ligand bonded to the titanium atom through an oxygen atom.

11. The moisture-curable polysilylated polyether composition of claim 10 wherein each R¹⁴ is methyl, ethyl, n-propyl, isopropyl, n-butyl, sec-butyl or t-butyl and each R¹⁵ is methoxyl, ethoxyl, n-propoxyl, isopropoxyl, n-butoxyl, sec-butoxyl, t-butoxyl, phenoxyl, acetoacetate, methyl acetoacetate or ethyl acetoacetate.

12. The moisture-curable polysilylated polyether composition of any preceding claim wherein the catalyst includes a dialkoxy titanium bis alkylacetoacetonate in which the alkoxy groups are independently methoxyl, ethoxyl or isopropoxyl.

13. The moisture-curable catalyst of any of claims 1-9 wherein the catalyst includes at least one zinc catalyst and at least one cyclic amidine catalyst.

14. The moisture-curable catalyst of claim 12, wherein the zinc catalyst includes at least one zinc carboxylate, at least one zinc enolate, or a mixture thereof.

15. The moisture-curable catalyst of claim 13 or 14, wherein the amidine catalyst includes 1,8-diazabicyclo[5.4.0]undec-7-ene.

## Patentansprüche

1. Eine feuchtigkeitshärtbare Zusammensetzung von polysilyliertem Polyether, beinhaltend:
a) mindestens einen Urethangruppen enthaltenden polysilylierten Polyether, der frei von Harnstoffgruppen ist, zwei oder mehr Dialkoxysilyl- und/oder Trialkoxysilylgruppen pro Molekül aufweist und eine zahlenmittlere Molekülmasse von 4 000 bis 20 000 aufweist; wobei die Urethangruppen des polysilylierten Polyethers aliphatische Urethangruppen sind; und
b) eine katalytisch wirksame Menge eines Katalysators, der aus einem Titan(IV)-Katalysator und einer Mischung von einem Zinkkatalysator und einem cyclischen Amidinkatalysator ausgewählt ist;
wobei die Zusammensetzung von polysilyliertem Polyether nicht mehr als 1 000 Gewichtsanteile Zinn pro Millionen Gewichtsanteile des polysilylierten Polyethers enthält.

2. Feuchtigkeitshärtbare Zusammensetzung von polysilyliertem Polyether gemäß Anspruch 1, wobei der polysilylierte Polyether zwei oder mehr Dialkoxysilylgruppen pro Molekül enthält, wobei die Dialkoxysilylgruppen optional Alkyldimethoxylsilyl- oder Alkyldiethoxysilylgruppen sind.

3. Feuchtigkeitshärtbare Zusammensetzung von polysilyliertem Polyether gemäß einem der vorhergehenden Ansprüche, der es an Aminosilanverbindungen fehlt und/oder die eine Epoxysilanverbindung enthält.

4. Feuchtigkeitshärtbare Zusammensetzung von polysilyliertem Polyether gemäß einem der vorhergehenden Ansprüche, wobei Komponente a) eine zahlenmittlere Molekülmasse von 6 000 bis 13 000 und 3 bis 4 hydrolysierbare Silylgruppen pro Molekül aufweist.

5. Feuchtigkeitshärtbare Zusammensetzung von polysilyliertem Polyether gemäß einem der vorhergehenden Ansprüche, wobei Komponente a) eine oder mehrere durch die Struktur (I) dargestellte Verbindungen ist: 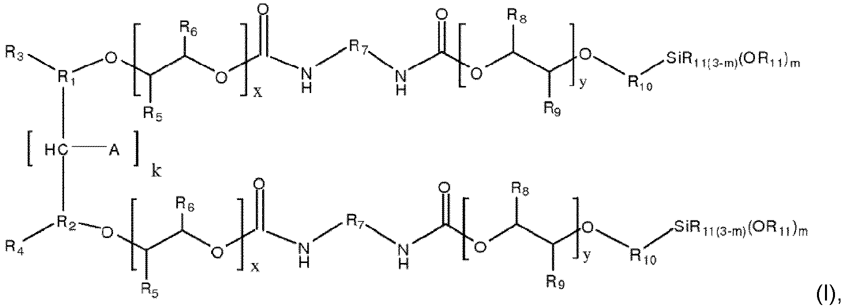 wobei A entweder H ist oder die Struktur (II) aufweist: 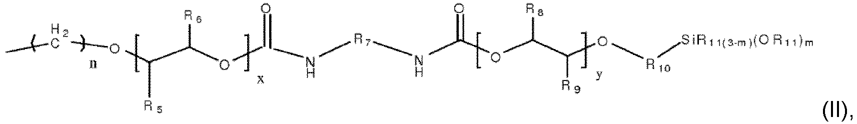 k eine Zahl von 0 bis 4 ist, m und n unabhängig Zahlen von 0 bis 3 sind, die Werte von x und y solche Zahlen sind, dass die Verbindung eine zahlenmittlere Molekülmasse von 4 000 bis 20 000 aufweist, R₁, R₂, R₁₀ und R₁₁ unabhängig geradkettige oder verzweigte Alkylgruppen mit 1 bis 4 Kohlenstoffatomen sind, R₃, R₄, R₅, R₆, R₈ und R₉ unabhängig Wasserstoff oder geradkettige oder verzweigte Alkylgruppen mit 1 bis 4 Kohlenstoffatomen sind und R₇ aliphatisch, cycloaliphatisch, bisbenzylisch und/oder aromatisch ist und 2 bis 20 Kohlenstoffatome aufweist.

6. Feuchtigkeitshärtbare Zusammensetzung von polysilyliertem Polymer gemäß einem der vorhergehenden Ansprüche, ferner beinhaltend c) einen oder mehrere niedermolekulare polysilylierte Polyether, die frei von Harnstoffgruppen sind, im Mittel 1,8 bis 4 endständige hydrolysierbare Silylgruppen pro Molekül aufweisen und eine Molekülmasse von 1 000 bis weniger als 400 aufweisen.

7. Feuchtigkeitshärtbare Zusammensetzung von polysilyliertem Polyether gemäß Anspruch 6, wobei Komponente c) eine oder mehrere durch die folgende Struktur dargestellte Verbindungen ist: 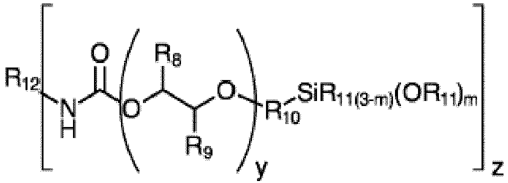 wobei R₈, R₉, R₁₀, R₁₁ unabhängig geradkettige oder verzweigte Alkylgruppen mit 1 bis 4 Kohlenstoffatomen sind, y eine solche Zahl ist, dass die Molekülmasse des zweiten silylierten Polyethers 1 000 bis weniger als 4 000 beträgt, R₁₂ der Rest von einem Polyisocyanat mit z Isocyanatgruppen und einer Molekülmasse von bis zu 500 nach Entfernung von Isocyanatgruppen ist und z einen mittleren Wert von 1,8 bis 4 aufweist.

8. Feuchtigkeitshärtbare Zusammensetzung von polysilyliertem Polyether gemäß Anspruch 6 oder 7, wobei Komponente c) eine Molekülmasse von 1 200 bis 3 000 und im Mittel 1,8 bis 2,5 hydrolysierbare Silylgruppen pro Molekül aufweist.

9. Feuchtigkeitshärtbare Zusammensetzung von polysilyliertem Polyether gemäß einem der vorhergehenden Ansprüche, die ferner mindestens einen mineralischen Füllstoff beinhaltet.

10. Feuchtigkeitshärtbare Zusammensetzung von polysilyliertem Polyether gemäß einem der vorhergehenden Ansprüche, wobei der Katalysator mindestens einen Titankatalysator umfasst, der durch die folgende Struktur dargestellt wird: 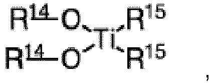 wobei jeder R¹⁴ unabhängig Alkyl, Phenyl oder alkylsubstituiertes Phenyl ist und jeder R¹⁵ Alkoxy, Phenoxy, alkylsubstituiertes Phenoxy, eine über ein Sauerstoffatom an das zentrale Titanatom gebundene 1,3-Diketonverbindung oder ein anderer über ein Sauerstoffatom an das Titanatom gebundener Ligand ist.

11. Feuchtigkeitshärtbare Zusammensetzung von polysilyliertem Polyether gemäß Anspruch 10, wobei jeder R¹⁴ Methyl, Ethyl, n-Propyl, Isopropyl, n-Butyl, sec-Butyl oder t-Butyl ist und jeder R¹⁵ Methoxyl, Ethoxyl, n-Propoxyl, Isopropoxyl, n-Butoxyl, sec-Butoxyl, t-Butoxyl, Phenoxyl, Acetoacetat, Methylacetoacetat oder Ethylacetoacetat ist.

12. Feuchtigkeitshärtbare Zusammensetzung von polysilyliertem Polyether gemäß einem der vorhergehenden Ansprüche, wobei der Katalysator ein Dialkoxytitanbisalkylacetoacetonat umfasst, in dem die Alkoxygruppen unabhängig Methoxyl, Ethoxyl oder Isopropoxyl sind.

13. Feuchtigkeitshärtbarer Katalysator gemäß einem der Ansprüche 1-9, wobei der Katalysator mindestens einen Zinkkatalysator und mindestens einen cyclischen Amidinkatalysator umfasst.

14. Feuchtigkeitshärtbarer Katalysator gemäß Anspruch 12, wobei der Zinkkatalysator mindestens ein Zinkcarboxylat, mindestens ein Zinkenolat oder eine Mischung davon umfasst.

15. Feuchtigkeitshärtbarer Katalysator gemäß Anspruch 13 oder 14, wobei der Amidinkatalysator 1,8-Diazabicyclo[5.4.0]undec-7-en umfasst.

## Revendications

1. Une composition de polyéther polysilylé durcissable à l'humidité comprenant
a) au moins un polyéther polysilylé contenant des groupes uréthane, exempt de groupes urée, ayant deux groupes dialcoxysilyle et/ou trialcoxysilyle ou plus par molécule et une masse moléculaire moyenne en nombre de 4 000 à 20 000 ; dans laquelle les groupes uréthane du polyéther polysilylé sont des groupes uréthane aliphatiques ; et
b) une quantité catalytiquement efficace d'un catalyseur choisi parmi un catalyseur au titane (IV) et un mélange d'un catalyseur au zinc et d'un catalyseur à amidine cyclique ;
la composition de polyéther polysilylé ne contenant pas plus de 1 000 parties en poids d'étain par million de parties en poids du polyéther polysilylé.

2. La composition de polyéther polysilylé durcissable à l'humidité de la revendication 1, dans laquelle le polyéther polysilylé contient deux groupes dialcoxysilyle ou plus par molécule, facultativement dans laquelle les groupes dialcoxysilyle sont des groupes alkyldiméthoxysilyle ou alkyldiéthoxysilyle.

3. La composition de polyéther polysilylé durcissable à l'humidité de n'importe quelle revendication précédente, qui est dépourvue de composés aminosilane et/ou qui contient un composé époxysilane.

4. La composition de polyéther polysilylé durcissable à l'humidité de n'importe quelle revendication précédente dans laquelle le constituant a) a une masse moléculaire moyenne en nombre de 6 000 à 13 000 et 3 à 4 groupes silyle hydrolysables par molécule.

5. La composition de polyéther polysilylé durcissable à l'humidité de n'importe quelle revendication précédente dans laquelle le constituant a) est un ou plusieurs composés représentés par la structure (I) : 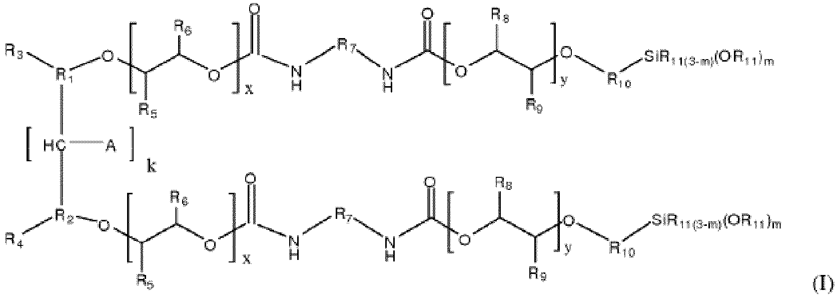 où A soit est H, soit a la structure (II) : 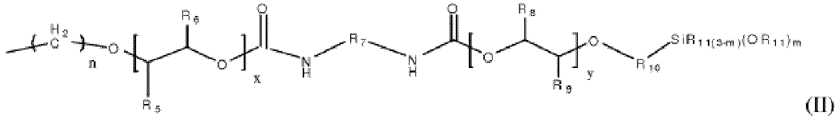 k est un nombre allant de 0 à 4, m et n sont indépendamment des nombres allant de 0 à 3, les valeurs de x et y sont des nombres tels que le composé a une masse moléculaire moyenne en nombre de 4 000 à 20 000, R₁, R₂, R₁₀ et R₁₁ sont indépendamment des groupes alkyle à chaîne droite ou ramifiés ayant 1 à 4 atomes de carbone, R₃, R₄, R₅, R₆, R₈ et R₉ sont indépendamment un hydrogène ou des groupes alkyle à chaîne droite ou ramifiés ayant 1 à 4 atomes de carbone, et R₇ est aliphatique, cycloaliphatique, bisbenzylique et/ou aromatique et a 2 à 20 atomes de carbone.

6. La composition de polymère polysilylé durcissable à l'humidité de n'importe quelle revendication précédente, comprenant en outre c) un ou plusieurs polyéthers polysilylés de faible masse moléculaire qui sont exempts de groupes urée, ont une moyenne de 1,8 à 4 groupes silyle hydrolysables terminaux par molécule et ont une masse moléculaire de 1 000 à moins de 400.

7. La composition de polyéther polysilylé durcissable à l'humidité de la revendication 6 dans laquelle le constituant c) est un ou plusieurs composés représentés par la structure 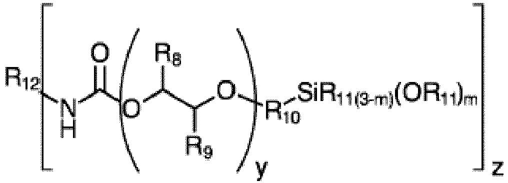 dans laquelle R₈, R₉, R₁₀, R₁₁ sont indépendamment des groupes alkyle à chaîne droite ou ramifiés ayant 1 à 4 atomes de carbone, y est un nombre tel que la masse moléculaire du deuxième polyéther silylé est de 1 000 à moins de 4 000, R₁₂ est le résidu, après élimination des groupes isocyanate, d'un polyisocyanate ayant z groupes isocyanate et une masse moléculaire allant jusqu'à 500, et z a une valeur moyenne de 1,8 à 4.

8. La composition de polyéther polysilylé durcissable à l'humidité de la revendication 6 ou de la revendication 7 dans laquelle le constituant c) a une masse moléculaire de 1 200 à 3 000 et une moyenne de 1,8 à 2,5 groupes silyle hydrolysables par molécule.

9. La composition de polyéther polysilylé durcissable à l'humidité de n'importe quelle revendication précédente qui comprend en outre au moins une charge minérale.

10. La composition de polyéther polysilylé durcissable à l'humidité de n'importe quelle revendication précédente dans laquelle le catalyseur inclut au moins un catalyseur au titane représenté par la structure : 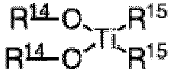 dans laquelle chaque R¹⁴ est indépendamment un alkyle, un phényle ou un phényle à substitution alkyle, et chaque R¹⁵ est un alcoxy, un phénoxy, un phénoxy à substitution alkyle, un composé 1,3-dicétone lié à l'atome de titane central au moyen d'un atome d'oxygène, ou un autre ligand lié à l'atome de titane au moyen d'un atome d'oxygène.

11. La composition de polyéther polysilylé durcissable à l'humidité de la revendication 10 dans laquelle chaque R¹⁴ est un méthyle, un éthyle, un n-propyle, un isopropyle, un n-butyle, un sec-butyle ou un t-butyle et chaque R¹⁵ est un méthoxyle, un éthoxyle, un n-propoxyle, un isopropoxyle, un n-butoxyle, un sec-butoxyle, un t-butoxyle, un phénoxyle, un acétoacétate, un acétoacétate de méthyle ou un acétoacétate d'éthyle.

12. La composition de polyéther polysilylé durcissable à l'humidité de n'importe quelle revendication précédente dans laquelle le catalyseur inclut un bis alkylacétoacétonate de dialcoxy titane dans lequel les groupes alcoxy sont indépendamment un méthoxyle, un éthoxyle ou un isopropoxyle.

13. Le catalyseur durcissable à l'humidité de n'importe lesquelles des revendications 1 à 9, le catalyseur incluant au moins un catalyseur au zinc et au moins un catalyseur à amidine cyclique.

14. Le catalyseur durcissable à l'humidité de la revendication 12, dans lequel le catalyseur au zinc inclut au moins un carboxylate de zinc, au moins un énolate de zinc, ou un mélange de ceux-ci.

15. Le catalyseur durcissable à l'humidité de la revendication 13 ou de la revendication 14, dans lequel le catalyseur à l'amidine inclut du 1,8-diazabicyclo[5.4.0]undéc-7-ène.
